# EUROPÄISCHE PATENTANMELDUNG

(11) **EP 0 999 366 A1**
(43) Veröffentlichungstag der Anmeldung: **10.05.2000**
(21) Anmeldenummer: 99121377.8
(22) Anmeldetag: 27.10.1999
(51) Int. Cl.: F04D 15/00, F16K 1/226

(54) **Kreiselpumpe mit Absperrklappe**

(30) Priorität: 06.11.1998 DE 19851343
(71) Anmelder: WILO GmbH, D-44263 Dortmund (DE); Ebro Armaturen Gebr. Bröer GmbH, 58135 Hagen (DE)
(72) Erfinder: Kipp, Günter, 49525 Lengerich (DE); Soyubey, Ismet Sacil, 59425 Unna (DE)
(74) Vertreter: COHAUSZ HANNIG DAWIDOWICZ & PARTNER

(57) **Zusammenfassung**

Kreiselpumpe mit einem Saug- 1 und einem Druckstutzen 2 und mit einer in einem Stutzen 1, 2 angeordneten Absperrklappe 4, wobei die Absperrklappe 4 in einer Schließstellung mit ihrem Klappenrand gegen die Innenwand einer im Stutzen befindlichen Dichtmanschette 5 abdichtet und wobei die Absperrklappe 4 über einen von Außen zugänglichen Verstellbolzen 6 um eine Schwenkachse 7 von der Schließstellung in eine Durchflußstellung verschwenkbar ist, wobei die Absperrklappe 4 nur an dem einen, die Wand der Dichtmanschette 5 durchgreifenden Ende des Verstellbolzens 6 einseitig gelagert ist und die Dichtmanschette 5 von einem 14 Druckring gehalten wird.

## Beschreibung

Die Erfindung betrifft eine Kreiselpumpe mit einem Saug- und einem Druckstutzen und mit einer in einem Stutzen angeordneten Absperrklappe, wobei die Absperrklappe in einer Schließstellung mit ihrem Klappenrand gegen die Innenwand einer im Stutzen befindlichen Dichtmanschette abdichtet und wobei die Absperrklappe über einen von Außen zugänglichen Verstellbolzen um eine Schwenkachse von der Schließstellung in eine Durchflußstellung verschwenkbar ist.

Absperrklappen dieser Art im Saug- und/oder Druckstutzen von Kreiselpumpen einzusetzen ist bekannt. Sie vereinfachen die Wartung der Pumpe insofern, als zur Demontage des Laufrades oder zur Reparatur der Motorkomponenten lediglich durch schließen der Klappen die Pumpe vom Wasserkreislauf getrennt werden braucht, ohne daß das gesamte System entwässert werden muß. Bekanntermaßen wird zur Abdichtung einer solchen Klappe eine aus Silikonkautschuk geformte Dichtmanschette in den Stutzen eingesetzt, an der die Klappe mit ihrem Klappenrand anliegt.

Problematisch bei den bekannten Pumpen ist, daß die Lagerung und Abdichtung der Klappen im Saug- und/oder Druckstutzen sehr aufwendig ist und der Einsatz dieser Art von Absperrklappen mit hohen Fertigungskosten einhergeht. So werden die bekannten Klappen durch zwei koaxial an zwei Seiten der Klappe angebrachten Wellenenden gelagert, die jeweils in einer Bohrung in der Wand des Stutzens gelagert sind. Diese Lagerung macht insofern eine aufwendige Fertigung notwendig, als die diametral gegenüberliegenden Bohrungen in die Stutzenwand auf ihrer ganzen Länge sehr genau koaxial ausgerichtet sein müssen. Ebenso muß die Dichtmanschette zwei derartige koaxiale Bohrungen in ihrer Wand aufweisen. Bei der Montage muß zunächst die Klappe eingesetzt werden, die dann an den von beiden Seiten eingeführten Wellenenden aufgehängt wird. Bei den bekannten Klappen hat sich gezeigt, daß eine ausreichende Dichtigkeit nicht immer erreicht werden kann.

Aufgabe der vorliegenden Erfindung ist es daher, eine Kreiselpumpe auf einfache und kostengünstige Weise mit einer solchen Absperrklappe auszurüsten, die bei hoher Zuverlässigkeit und großer Dichtigkeit eine einfache Montage ermöglicht.

Diese Aufgabe wird durch eine Kreiselpumpe nach Anspruch 1 gelöst.

Die besonderen Vorteile der erfindungsgemäßen Kreiselpumpe sind einerseits durch die einseitige Lagerung der Klappe und andererseits durch die besondere Form der Dichtmanschette bedingt. Insbesondere zusammen mit der besonderen Art der Halterung der Dichtmanschette durch einen Druckring ist eine kostengünstige und besonders zuverlässige Ausführungsform der erfindungsgemäßen Kreiselpumpe gegeben.

Wegen der einseitigen Lagerung der Klappe auf einem die Welle bildenden Verstellbolzen steht der Rand der Klappe mit beinahe dem gesamten Umfang für die Abdichtung zur Verfügung. Insbesondere liegt die Klappe auch mit der dem Wellenansatz gegenüberliegenden Stelle - am Austrittspunkt der imaginären Schwenkachse aus der Klappenfläche - direkt an der Innenwand der Dichtmanschette an. Da nunmehr eine zweite Unterbrechung der ringförmigen Dichtung durch ein Wellenende nicht mehr nötig ist, kann durch die erfindungsgemäße einseitige Lagerung der Klappe eine besonders hohe Dichtigkeit gewährleistet werden. Gleichzeitig trägt die erfindungsgemäße Lagerung der Klappe zur Vermeidung von Leckströmen zum Lager der Verstellbolzen bei, so daß die Zuverlässigkeit der Lager und deren Lebensdauer erhöht wird. Außerdem bedingt die einseitige Lagerung eine Vergrößerung des wirksamen Querschnittes eines Stutzens bei geöffneter Klappe.

Dabei vermeidet die einseitige Lagerung mindestens einen Fertigungsschritt und trägt somit zu Reduzierung der Herstellungskosten bei. Gleichzeitig ermöglicht die einseitige Lagerung wegen der Ersparnis der zweiten Lagerung eine kompaktere Bauweise des Pumpenstutzens und damit der ganzen Pumpe. Diese benötigt damit in der erfindungsgemäßen Auführungsform weniger Einbauraum und kann selbst unter beengten Verhältnissen eingesetzt werden.

In einer besonders vorteilhaften Ausführungsform ist die Klappe so konzipiert, daß der Verstellbolzen formschlüssig und/oder kraftschlüssig, insbesondere über ein Vierkantprofil, in einer in der Absperrklappe vorgesehenen Ausnehmung einliegt. Dadurch wird einerseits die Montage vereinfacht und andererseits die Zuverlässigkeit weiter erhöht.

In einer besonderen Ausführungsform ist die Dichtmanschette eine aus gummielastischem Werkstoff geformte Hülse, wobei ein Kautschuk besonders zu bevorzugen ist. Um eine besonders einfache Montage der Manschette zu gewährleisten und um die Elastizität und damit Dichtwirkung dauerhaft zu erhöhen wird die Wandstärke der Dichtmanschette so gewählt, daß sie zwischen 5% und 20%, insbesondere 12%, des Innendurchmessers der hülsenförmigen Manschette ausmacht. Die Höhe der Dichtmanschette liegt zwischen 60% und 90% der Nennweite, wobei etwa 80% aus Gründen der Festigkeit besonders vorteilhaft sind. Die vorteilhaften Dimensionen der Wandstärke bedingen eine größere Elastizität und damit eine größere Dichtigkeit. Zur Durchführung des Verstellbolzens ist in der Seitenwand genau eine Bohrung vorgesehen.

In einer besonders vorteilhaften Ausführungsform wird die in den Stutzen eingebrachte und in einer Aufnahme gehaltene Dichtmanschette mit einem auf den freien Rand der Manschette aufgesetzten Druckring gehalten. Dieser Druckring ist in der Bohrung versenkt, so daß seine nach außen gerichtete Stirnseite bündig mit dem Flansch des Stutzens abschließt. Der Druckring ist in einer besonders einfachen Ausführung in die Bohrung eingepreßt oder eingeschraubt. Besonders vorteilhaft an dem Einsatz des Druckringes ist, daß die Pumpe mit den Absperrklappen vollständig montiert werden und auf die Dichtigkeit der Klappen hin überprüft werden kann. Ein Einbau der Pumpe in ein Leitungssystem ist nicht mehr notwendig.

Vorteilhafterweise ist an die Außenwand der Dichtmanschette ein Vorsprung angeformt, der vorteilhafterweise die für die Durchführung des Verstellbolzens vorgesehene Bohrung umgibt und der für die sichere Positionierung der Dichtmanschette in der Aufnahme sorgt. Dazu ist an entsprechender Stelle in der Innenwand des Stutzens eine Ausnehmung eingebracht, in die der Vorsprung im eingebauten Zustand eingreift. In einer vorteilhaften Ausführungsform der Dichtmanschette ist diese mit einer balligen oder konvexen Innenfäche versehen, die in der Ebene der geschlossenen Klappe ihr Maximum erreicht. Durch diese Ausbildung wird die Reibung zwischen der Manschette und dem Klappenrand minimiert, so daß eine gute Beweglichkeit der Klappe bei geringen Verstellkräften am Verstellbolzen gewährleistet ist.

Eine Ausführungsform der erfindungsgemäßen Pumpe ist in den Zeichnungen 1 und 2 dargestellt und wird im folgenden näher beschrieben. Es zeigen:
- **Figur 1**: einen Schnitt durch das Gehäuse einer Kreiselpumpe und
- **Figur 2**: die Lagerung einer Absperrklappe.

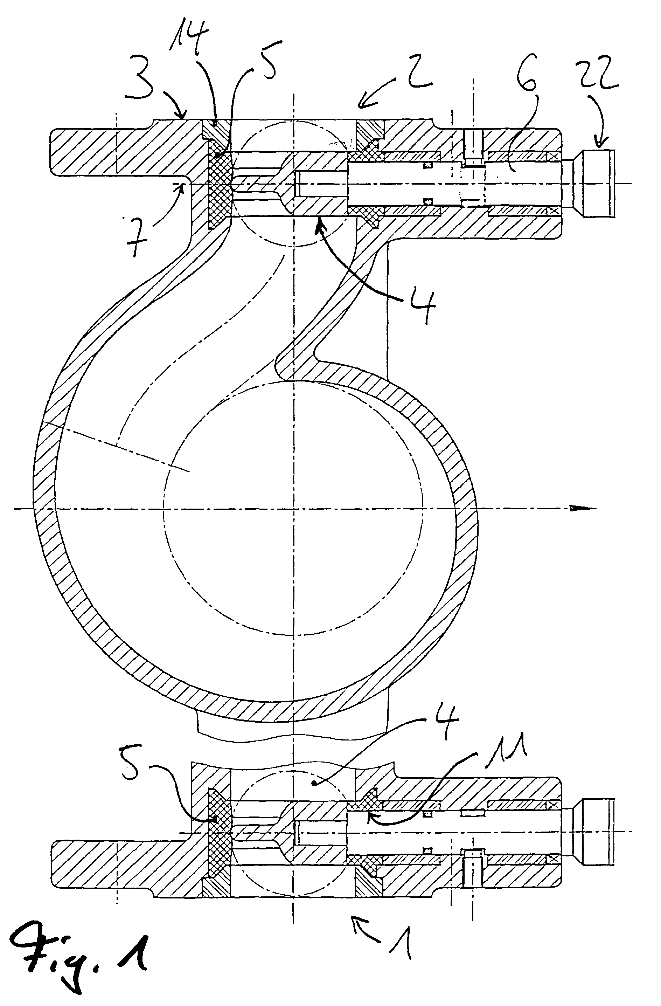

In Figur 1 ist ein Schnitt durch das Gehäuse einer Kreiselpumpe dargestellt. Diese hat einen Saugstutzen 1 und einen koaxial (in-line) dazu ausgerichteten Druckstutzen 2. Beide Stutzen sind jeweils über einen Abschlußflansch 3 an eine Rohrleitung anschließbar. Innerhalb eines jeden Stutzens ist jeweils eine Absperrklappe 4 angeordnet, die in Schließstellung mit ihrem Klappenrand gegen die Innenwand einer im Stutzen befindlichen Dichtmanschette 5 anliegt und dagegen abdichtet. In den Figuren ist die Absperrklappe 4 in ihrer Schließstellung gezeigt, während die geöffnete Durchflußstellung mit einer unterbrochenen Linie angedeutet ist.

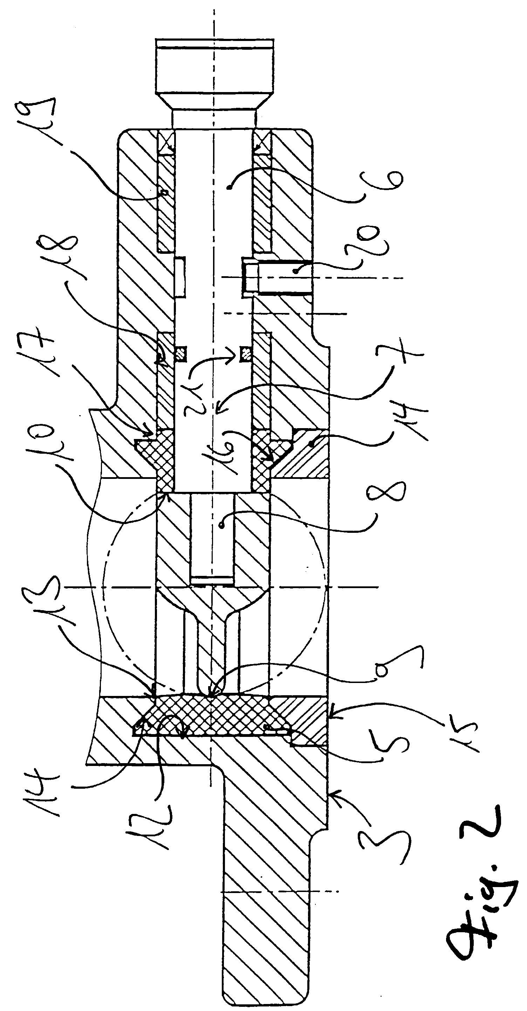

Die Absperrklappen 4 sind über einen von Außen zugänglichen Verstellbolzen 6 um ihre Achse 7 von der Schließstellung in die Duchflußstellung verschwenkbar. Die Verstellbolzen 6 halten die jeweilige Klappe 4 einseitig mit ihren die Wand der Dichtmanschette 5 durchgreifenden Ende 8. Wegen der einseitigen Lagerung liegt eine Klappe mit ihrem Klappenrand am Austrittspunkt 9 der Schwenkachse 7 an der Innenwand 10 der Dichtmanschette 5 an (Figur 2). Die Dichtmanschette 5 ist ein Ring aus Kautschuk der in seiner Seitenwand genau eine Bohrung 11 zur Durchführung des Verstellbolzens hat. Sie ist durch die Öffnung eines Stutzens hindurch in eine in der Wand des Stutzens vorgesehene Aufnahme 12 einsetzbar. Die Aufnahme 12 ist eine koaxial in die Öffnung des Stutzens eingebrachte Bohrung mit einer ringförmigen Auflagekante 13 für die Dichtmanschette 5 an ihrem Boden.

In der dargestellten besonderen Ausführungsform sind die Stirnseiten der Dichtmanschetten 5 als Innenkonus ausgebildet, wobei die jeweilige Auflagekante 13 eine entsprechende konusförmige Ringnut 14 aufweist. In dieser Ringnut 14 liegt die Stirnseite der Manschette 5 ein und dichtet gegen den Boden der Nut und die schräge Seitenfläche ab. Die gezeigte Ausführungsform der Dichtmanschette 5 weist eine konvex nach Innen gewölbte Innenwand auf, deren Scheitel in der Ebene der Schwenkachse 7 liegt.

Die eingesetzte Dichtmanschette 5 wird durch einen Druckring 14 gehalten, der auf die Dichtmanschette 5 in die Bohrung 12 eingesetzt wird. Der Druckring 14 ist in dem vorliegenden Ausführungsbeispiel in die Bohrung 12 eingepreßt. Seine zum Abschlußflansch gerichtete Stirnseite 15 schließt mit der Oberfläche des Abschlußflansches 3 bündig ab. Wie die andere Stirnseite, so ist auch die dem Druckring 14 zugewandte Stirnseite der Dichtmanschette 5 als Innenkonus ausgebildet, der von einem entsprechenden in den Druckring 14 eingebrachten Außenkonus 16 beaufschlagt wird. Damit wird bei guter Zentrierung eine optimale Dichtigkeit gewährleistet. An die Außenwand der Dichtmanschette 5 ist ein als Buchse 17 ausgebildeter Vorsprung angeformt, der in die Lagerbohrung 18 des Verstellbolzens 6 eingreift.

Der Verstellbolzen 6 ist in einem in die Bohrung 18 eingebrachten zweiteiligen Gleitlager 19 gelagert. Der Verstellbolzen 6 ist über eine O-Ringdichtung 21 gegen die Innenwand der Bohrung 18 abgedichtet. Er ist an seinem Ende 8 zu einem Vierkantprofil geformt, das formschlüssig in eine Ausnehmung der Absperrklappe 5 eingreift. Mittels einer Feststellvorrichtung in Form einer Madenschraube 20 kann der Verstellbolzen festgesetzt werden. Der Verstellbolzen 6 kann über mittels eines am äußeren Ende angebrachten Griffabschnittes 22 manuell verstellt werden.

## Patentansprüche

1. Kreiselpumpe mit einem Saug- und einem Druckstutzen und mit einer in einem Stutzen angeordneten Absperrklappe, wobei die Absperrklappe in einer Schließstellung mit ihrem Klappenrand gegen die Innenwand einer im Stutzen befindlichen Dichtmanschette abdichtet und wobei die Absperrklappe über einen von Außen zugänglichen Verstellbolzen um eine Schwenkachse von der Schließstellung in eine Durchflußstellung verschwenkbar ist,
**dadurch gekennzeichnet,** daß die Absperrklappe (4) nur an dem einen, die Wand der Dichtmanschette (5) durchgreifenden Ende (8) des Verstellbolzens (6) einseitig gelagert ist.

2. Kreiselpumpe nach Anspruch 1,
**dadurch gekennzeichnet,** daß die Klappe (4) mit ihrem Klappenrand am Austrittspunkt (9) der Schwenkachse (7) an der Innenwand (10) der Dichtmanschette (5) anliegt.

3. Kreiselpumpe nach Anspruch 1 oder 2,
**dadurch gekennzeichnet,** daß Dichtmanschette (5) ein geschlossener Ring aus gummielastischem Werkstoff ist, der in seiner Seitenwand genau eine Bohrung (11) zur Durchführung des Verstellbolzens (6) hat.

4. Kreiselpumpe nach Anspruch 3,
**dadurch gekennzeichnet,** daß die Dichtmanschette (5) durch den Stutzen (1,2) hindurch in eine Aufnahme (12) einsetzbar ist.

5. Kreiselpumpe nach Anspruch 4,
**dadurch gekennzeichnet,** daß die Aufnahme (12) eine koaxial zum Stutzen (1,2) ausgerichtete Bohrung ist, deren Durchmesser dem Außendurchmesser der Dichtmanschette (5) entspricht, wobei die Dichtmanschette (5) gegen den Boden (13) der Aufnahme (12) abdichtet.

6. Kreiselpumpe nach Anspruch 4 oder 5,
**dadurch gekennzeichnet,** daß eine Stirnseite der Dichtmanschette (5) als Innenkonus ausgebildet ist und in einer entsprechend konusförmigen Ringnut (14) im Boden der Aufnahme (12) einliegt.

7. Kreiselpumpe nach einem der vorherigen Ansprüche,
**dadurch gekennzeichnet,** daß die in der Aufnahme (12) eingesetzte Dichtmanschette (5) mittels eines in der Aufnahme (12) versenkten Druckringes (14) gehalten ist, der in die Bohrung der Aufnahme (12) eingepreßt oder eingeschraubt ist.

8. Kreiselpumpe nach einem der vorherigen Ansprüche,
**dadurch gekennzeichnet,** daß dem Druckring (14) zugewandte Stirnseite der Dichtmanschette (5) als Innenkonus ausgebildet ist und gegen eine entsprechend als Außenkonus (16) ausgebildete Stirnseite des Druckringes (14) anliegt.

9. Kreiselpumpe nach einem der vorherigen Ansprüche,
**dadurch gekennzeichnet,** daß an die Außenwand der Dichtmanschette (5) ein Vorsprung (17) angeformt ist, der im eingebauten Zustand in eine entsprechende Ausnehmung (18) in der Stutzeninnenwand eingreift.

10. Kreiselpumpe nach Anspruch 9,
**dadurch gekennzeichnet,** daß der Vorsprung (17) als eine die Bohrung zur Durchführung des Verstellbolzens (6) umgebende Buchse angeformt ist.

11. Kreiselpumpe nach einem der vorherigen Ansprüche,
**dadurch gekennzeichnet,** daß die Innenwand der Dichtmanschette (5) konvex ausgebildet ist.

12. Kreiselpumpe nach einem der vorherigen Ansprüche,
**dadurch gekennzeichnet,** daß der Verstellbolzen (6) in mindestens einem, vorzugsweise aus Messing gefertigtem Gleitlager (19) gelagert ist.

13. Kreiselpumpe nach einem der vorherigen Ansprüche,
**dadurch gekennzeichnet,** daß der Verstellbolzen (6) formschlüssig und/oder kraftschlüssig, insbesondere über ein Vierkantprofil, in einer Ausnehmung der Absperrklappe (4) einliegt.

14. Kreiselpumpe nach einem der vorherigen Ansprüche,
**dadurch gekennzeichnet,** daß eine Feststellvorrichtung, insbesondere eine Schraube (20), zum Feststellen des Verstellbolzens vorgesehen ist.

15. Kreiselpumpe nach einem der vorherigen Ansprüche,
**dadurch gekennzeichnet,** daß die Dichtmanschette (5) aus einem Silikonkautschuk geformt ist.

16. Kreiselpumpe nach einem der vorherigen Ansprüche,
**dadurch gekennzeichnet,** daß die Stärke der Wand der Dichtmanschette zwischen 5% und 20%, insbesondere 12%, der Nennweite Dichtmanschette ausmacht.

17. Kreiselpumpe nach einem der vorherigen Ansprüche,
**dadurch gekennzeichnet,** daß die axiale Länge der Dichtmanschette zwischen 60% und 90%, insbesondere 80%, der Nennweite Dichtmanschette ausmacht.
